# EUROPEAN PATENT APPLICATION

(11) **EP 3 878 593 A1**
(43) Date of publication of application: **15.09.2021**
(21) Application number: 19881674.6
(22) Date of filing: 25.07.2019
(51) Int. Cl.: B23K 20/12

(54) **LIQUID-COOLED JACKET MANUFACTURING METHOD AND FRICTION STIR WELDING METHOD**

(30) Priority: 05.11.2018 JP 2018208094
(71) Applicant: Nippon Light Metal Co., Ltd., Minato-ku Tokyo 105-0004 (JP)
(72) Inventor: HORI Hisashi, Shizuoka-shi, Shizuoka 421-3203 (JP); SEO Nobushiro, Shizuoka-shi, Shizuoka 421-3203 (JP)
(74) Representative: Kiwit, Benedikt
(86) International application number: PCT/JP2019/029171
(87) International publication number: WO 2020/095483

(57) **Abstract**

This invention is characterized by including: a primary joining process in which a coarse portion having a predetermined width is formed in the vicinity of a step side face (12b) within a plasticized region (W1) while a rotary tool (F) is being moved one round along a first butted portion (J1) to perform friction stirring in a state that a tip of a stirring pin (F2) of the rotary tool (F) which is rotated is inserted to the same depth as or slightly deeper than the step bottom face (12a) and only the stirring pin (F2) is slightly in contact with at least an upper portion of a jacket body (2); and an inspection process in which a passed position of the stirring pin (F2) is detected by performing a defect inspection to detect the coarse portion after the primary joining process.

## Description

### TECHNICAL FIELD

The present invention relates to a method for manufacturing a liquid-cooling jacket and a friction stir welding method.

### BACKGROUND ART

For example, a method for manufacturing a liquid-cooling jacket is disclosed in a patent literature 1. FIG. 15 is a cross sectional view showing a conventional method for manufacturing a liquid-cooling jacket. In the conventional method for manufacturing a liquid-cooling jacket, friction stir welding is performed to a butted portion J10 where a side face 102c of a sealing body 102 made of an aluminum alloy is butted against a step side face 101c of a step portion of a jacket body 101 made of an aluminum alloy. Furthermore, in the conventional method for manufacturing a liquid-cooling jacket, friction stir welding is performed in a state that only a stirring pin F2 of a rotary tool F is inserted in the butted portion J10. And further, in the conventional method for manufacturing a liquid-cooling jacket, the rotary tool F is moved in a state that a rotational axis C of the rotary tool F overlaps with the butted portion J10.

### CITATION LIST

### PATENT LITERATURE

Patent Literature 1: JP 2015-131321, A

### SUMMARY OF INVENTION

### TECHNICAL PROBLEM

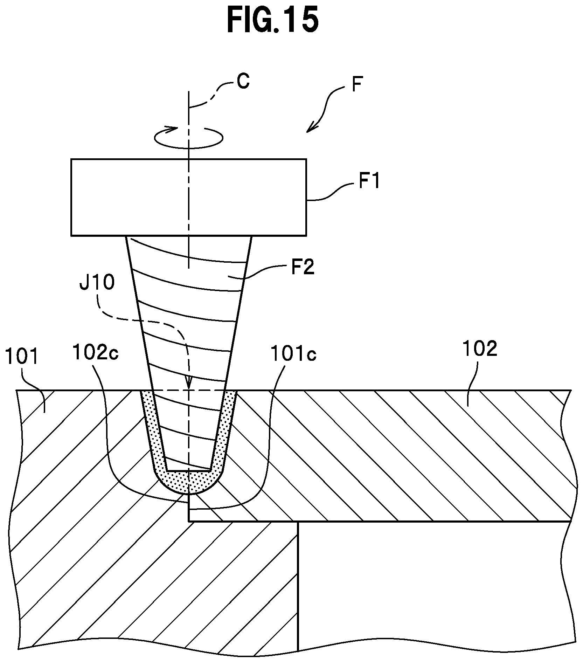

In general, the jacket body 101 tends to have a complex shape, so, for example, in some cases, the jacket body 101 is made of a casting material of a 4000 series aluminum alloy, and a member having a relatively simple shape such as the sealing body 102 is made of an expansible material of a 1000 series aluminum alloy. Thus, in some cases, a liquid-cooling jacket is manufactured by joining members made of different kinds of aluminum alloys together. In such cases, in general, the jacket body 101 has a higher hardness than the sealing body 102. Hence, in a case where friction stir welding is performed in such a manner as that shown in FIG. 15, the material resistance to the stirring pin F2 to receive from the jacket body 101 is larger than that to receive from the sealing body 102. As the result, it is difficult to stir different kinds of materials with good balance by the stirring pin of the rotary tool F, so that there exists a problem that a cavity defect is caused in a plasticized region formed by joining to reduce the joint strength.

Furthermore, after a liquid-cooling jacket is manufactured, in some cases, quality control of the liquid-cooling jacket is performed, for example, by ultrasonic inspection. In this inspection, the presence or absence of poor joining can be detected by ultrasonic inspection. However, there is a problem that it is not possible to know where the rotary tool has passed.

From such a view point, it is an object of the present invention to provide a method for manufacturing a liquid-cooling jacket and a friction stir welding method, the methods being capable of appropriately joining different kinds of aluminum alloys and knowing where the rotary tool has passed.

### SOLUTION TO PROBLEM

In order to solve the problem, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a material harder than the sealing body, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall step portion, the step side face standing from the step bottom face toward the opening portion; a placing process in which by placing the sealing body on the jacket body, a first butted portion is formed so that an outer peripheral side face of the sealing body is butted against the step side face of the peripheral wall step portion, and a second butted portion is formed so that the step bottom face overlaps with a back face of the sealing body; a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the jacket body; and an inspection process in which a passed position of the stirring pin is detected by performing a defect inspection to detect the coarse portion after the primary joining process.

According to the manufacturing method, the metal on the sealing body side in the first butted portion is mainly stirred to be plastically fluidized because of the frictional heat between the sealing body and the stirring pin, so that the step side face and an outer side face of the sealing body can be joined together in the first butted portion. Furthermore, since friction stirring is performed in a state that only the stirring pin is slightly in contact with at least an upper portion of the step side face of the jacket body, metal mixing into the sealing body from the jacket body can be reduced as much as possible while ensuring the joint strength. Hereby, the metal on the sealing body side is mainly frictionally stirred in the first butted portion, so that lowering of the joint strength can be suppressed.

Further, since the stirring pin is inserted to the same depth as or slightly deeper than the step bottom face, metal mixing into the sealing body from the jacket body can be reduced as much as possible while enhancing the joint strength of the second butted portion. And further, by deliberately forming the coarse portion having the predetermined width, the passed position of the stirring pin can be detected through the defect inspection. Hereby, the quality control work can be more easily performed.

Furthermore, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a material harder than the sealing body, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall step portion, the step side face standing from the step bottom face toward the opening portion, and the sealing body is formed to have a thickness larger than a height dimension of the step side face of the peripheral wall step portion; a placing process in which by placing the sealing body on the jacket body, a first butted portion is formed so that an outer peripheral side face of the sealing body is butted against the step side face of the peripheral wall step portion, and a second butted portion is formed so that the step bottom face overlaps with a back face of the sealing body; a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the jacket body; and an inspection process in which a passed position of the stirring pin is detected by performing a defect inspection to detect the coarse portion after the primary joining process.

According to the manufacturing method, the metal on the sealing body side in the first butted portion is mainly stirred to be plastically fluidized because of the frictional heat between the sealing body and the stirring pin, so that the step side face and an outer side face of the sealing body can be joined together in the first butted portion. Furthermore, since friction stirring is performed in a state that only the stirring pin is slightly in contact with at least an upper portion of the step side face of the jacket body, metal mixing into the sealing body from the jacket body can be reduced as much as possible while ensuring the joint strength. Hereby, the metal on the sealing body side is mainly frictionally stirred in the first butted portion, so that lowering of the joint strength can be suppressed.

Further, since the stirring pin is inserted to the same depth as or slightly deeper than the step bottom face, metal mixing into the sealing body from the jacket body can be reduced as much as possible while enhancing the joint strength of the second butted portion. And further, by deliberately forming the coarse portion having the predetermined width, the passed position of the stirring pin can be detected through the defect inspection. Hereby, the quality control work can be more easily performed. And metal shortage of the joined portion can be prevented by enlarging the thickness of the sealing body.

Furthermore, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a material harder than the sealing body, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall step portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between an outer peripheral side face of the sealing body and the step side face of the peripheral wall step portion, and a second butted portion is formed so that the step bottom face overlaps with a back face of the sealing body; a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the jacket body; and an inspection process in which a passed position of the stirring pin is detected by performing a defect inspection to detect the coarse portion after the primary joining process.

According to the manufacturing method, the metal on the sealing body side in the first butted portion is mainly stirred to be plastically fluidized because of the frictional heat between the sealing body and the stirring pin, so that the step side face and an outer side face of the sealing body can be joined together in the first butted portion. Furthermore, since friction stirring is performed in a state that only the stirring pin is slightly in contact with at least an upper portion of the step side face of the jacket body, metal mixing into the sealing body from the jacket body can be reduced as much as possible while ensuring the joint strength. Hereby, the metal on the sealing body side is mainly frictionally stirred in the first butted portion, so that lowering of the joint strength can be suppressed.

Further, since the stirring pin is inserted to the same depth as or slightly deeper than the step bottom face, metal mixing into the sealing body from the jacket body can be reduced as much as possible while enhancing the joint strength of the second butted portion. And further, by deliberately forming the coarse portion having the predetermined width, the passed position of the stirring pin can be detected through the defect inspection. Hereby, the quality control work can be more easily performed. Furthermore, by forming both of the outer circumferential face of the stirring pin and the step side face inclined, it can be avoided that the stirring pin and the step side face largely come into contact with each other. And metal shortage of the joined portion can be prevented by enlarging the thickness of the sealing body.

It is preferable that the sealing body is made of an aluminum alloy expansible material and the jacket body is made of an aluminum alloy casting material.

It is preferable that the rotary tool is rotated clockwise in a case where the rotary tool has a spiral groove on the outer circumferential face thereof, the spiral groove being counterclockwise with increasing distance from a base end toward a tip thereof, and the rotary tool is rotated counterclockwise in a case where the rotary tool has a spiral groove on the outer circumferential face thereof, the spiral groove being clockwise with increasing distance from the base end toward the tip thereof.

Hereby, the plastically fluidized metal is led toward the tip side of the stirring pin through the spiral groove, so that the occurrence of burrs can be reduced.

It is preferable that in the primary joining process, a rotational direction and an advancing direction of the rotary tool are set so that the jacket body side is a shear side and the sealing body side is a flow side within the plasticized region to be formed at the moving track of the rotary tool. Hereby, the jacket body side is set to be a shear side and the stirring action around the first butted portion by the stirring pin is enhanced, so that rising of the temperature at the first butted portion is expected, and the step side face and the outer side face of the sealing body can be more firmly joined together at the first butted portion.

It is preferable that in the primary joining process, friction stir welding is performed in a state that the rotary tool is inclined and furthermore, in a state that γ < α - β, the γ being an inclination angle of a rotational axis of the rotary tool with respect to a vertical plane, the β being an inclination angle of the step side face with respect to a vertical plane, the α being an inclination angle of the outer circumferential face of the stirring pin with respect to the rotational axis.

Furthermore, it is preferable that in the primary joining process, friction stir welding is performed in a state that 0 < α - β.

Hereby, friction stir welding can be performed in a state that the central axis of the rotary tool is inclined.

Furthermore, the present invention is characterized by a friction stir welding method in which a first member and a second member are joined together with use of a rotary tool provided with a stirring pin, wherein the first member is made of a material harder than the second member, and wherein an outer circumferential face of the stirring pin is inclined to have a smaller diameter with increasing distance toward a tip thereof, the method comprising: a preparation process in which a step portion having a step bottom face and a step side face standing on the step bottom face is formed in the first member; a placing process in which by placing the second member on the first member, a first butted portion is formed so that a side face of the second member is butted against the step side face of the step portion, and a second butted portion is formed so that the step bottom face overlaps with a back face of the second member; a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the first member; and an inspection process in which a passed position of the stirring pin is detected by performing a defect inspection to detect the coarse portion after the primary joining process.

### ADVANTAGEOUS EFFECTS OF INVENTION

According to the method for manufacturing a liquid-cooling jacket and the friction stir welding method according to the present invention, different kinds of metals can be appropriately joined together and it is possible to know where the rotary tool has passed.

### BRIEF DESCRIPTION OF THE DRAWINGS

FIG. 1 is a perspective view showing a preparation process of a method for manufacturing a liquid-cooling jacket according to a first embodiment of the present invention;
FIG. 2 is a cross sectional view showing a placing process of the method for manufacturing the liquid-cooling jacket according to the first embodiment;
FIG. 3 is a perspective view showing a primary joining process of the method for manufacturing the liquid-cooling jacket according to the first embodiment;
FIG. 4 is a cross sectional view showing the primary joining process of the method for manufacturing the liquid-cooling jacket according to the first embodiment;
FIG. 5 is a cross sectional view showing the liquid-cooling jacket after the primary joining process of the method for manufacturing the liquid-cooling jacket according to the first embodiment is finished;
FIG. 6 is a plan view showing an inspection process of the method for manufacturing the liquid-cooling according to the first embodiment;
FIG. 7 is a cross sectional view showing a primary joining process of a method for manufacturing a liquid-cooling jacket according to a second embodiment of the present invention;
FIG. 8 is a perspective view showing a preparation process of a method for manufacturing a liquid-cooling jacket according to a third embodiment;
FIG. 9 is a cross sectional view showing a primary joining process of the method for manufacturing the liquid-cooling according to the third embodiment;
FIG. 10 is a graph showing a relationship between a rotary tool position and a tensile strength in a test 1;
FIG. 11 is a schematic view showing an overlap joint in the test 1;
FIG. 12 is a schematic view showing an overlap joint + a butt joint in the test 1;
FIG. 13 is a schematic view showing a butt joint (partial overlap) in the test 1;
FIG. 14 is cross sectional views showing macrostructure cross sections of comparative examples 1 to 3 and an example in a test 2; and
FIG. 15 is a cross sectional view showing a conventional method for manufacturing a liquid-cooling jacket.

### DESCRIPTION OF EMBODIMENTS

### <First embodiment>

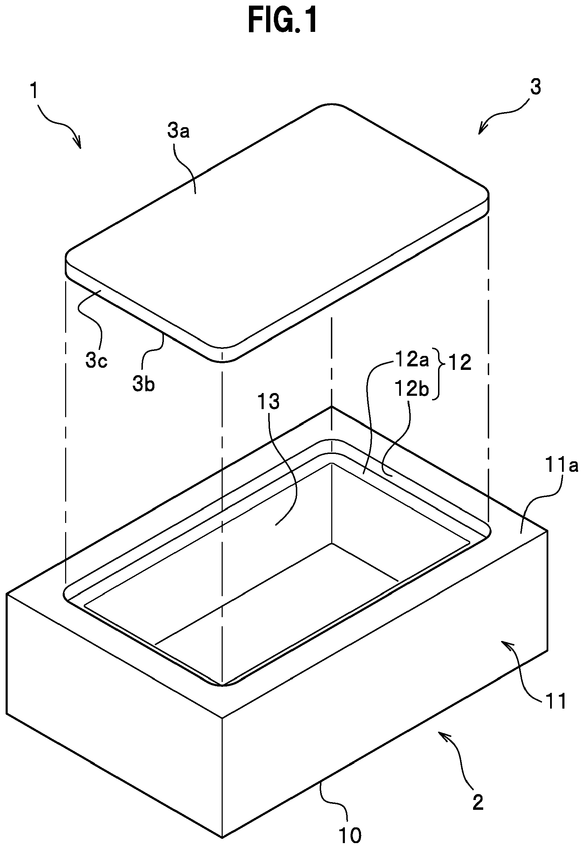

A method for manufacturing a liquid-cooling jacket according to an embodiment of the present invention will be described in detail with reference to Figures. As shown in FIG. 1, the method for manufacturing a liquid-cooling jacket 1 according to the embodiment of the present invention is a method where the liquid-cooling jacket 1 is manufactured by performing friction stir welding to a jacket body 2 and a sealing body 3. The liquid-cooling jacket 1 is a member on the sealing body 3 of which a heating body (not shown) is placed and inside which a fluid is allowed to flow to exchange heat with the heating body. Note that, hereinafter, a "front face" means the face opposite to a "back face".

The method for manufacturing the liquid-cooling jacket according to this embodiment has a preparation process, a placing process, a primary joining process and an inspection process. The preparation process is a process to prepare the jacket body 2 and the sealing body 3. The jacket body 2 is mainly composed of a bottom portion 10 and a peripheral wall portion 11. The jacket body 2 is made of a material mainly containing a first aluminum alloy. The first aluminum alloy is, for example, an aluminum alloy casting material such as JISH5302 ADC12 (based on Al-Si-Cu) . The jacket body 2 is made of an aluminum alloy as an example in this embodiment, but may be made of another metal capable of being frictionally stirred.

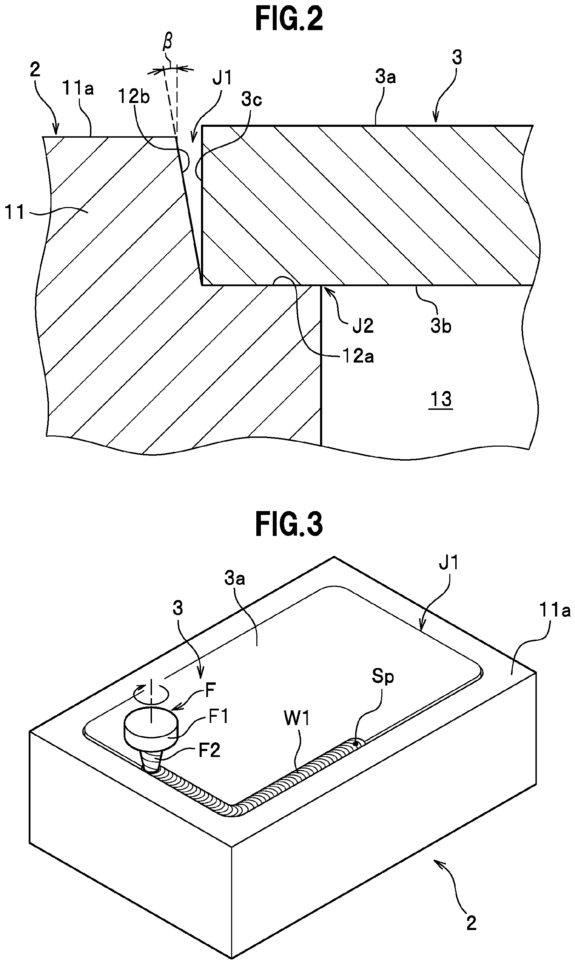

As shown in FIG. 1, the bottom portion 10 is a plate-like member having a rectangular shape in a plan view. The peripheral wall portion 11 is a wall portion standing on the peripheral edge portion of the bottom portion 10 and having a rectangular frame shape. A peripheral wall step portion 12 is formed at an inner peripheral edge of the peripheral wall portion 11. The peripheral wall step portion 12 is composed of a step bottom face 12a and a step side face 12b standing on the step bottom face 12a. As shown in FIG. 2, the step side face 12b inclines toward the outside to spread with increasing distance from the step bottom face 12a toward an opening portion. An inclination angle β of the step side face 12b with respect to a vertical plane may be appropriately set, and is set to, for example, 3° to 30° with respect to a vertical plane. A recessed portion 13 is defined by the bottom portion 10 and the peripheral wall portion 11. Here, the vertical plane is defined as a plane composed of an advancing vector of a rotary tool F and a vertical vector.

The sealing body 3 is a plate-like member to seal the opening portion of the jacket body 2. The sealing body 3 has a size capable of being placed on the peripheral wall step portion 12. A thickness of the sealing body 3 is larger than a height dimension of the step side face 12b. The thickness of the sealing body 3 is appropriately set so that a joint portion does not fall in shortage of metal when the primary joining process to be described later is performed. The sealing body 3 is made of a material mainly containing a second aluminum alloy. The second aluminum alloy has a hardness lower than the first aluminum alloy. The second aluminum alloy is, for example, an aluminum alloy expansible material such as JIS A1050, A1100, A6063. The sealing body 3 is made of an aluminum alloy as an example in this embodiment, but may be made of another metal capable of being frictionally stirred.

The placing process is a process to place the sealing body 3 on the jacket body 2 as shown in FIG. 2. In the placing process, a back face 3b of the sealing body 3 is placed on the step bottom face 12a. An outer side face 3c of the sealing body 3 is butted against the step side face 12b to form a first butted portion J1. The first butted portion J1 may also include a case where two members are butted against each other to have an approximately V-shaped gap in cross section like this embodiment. Furthermore, the back face 3b of the sealing body 3 is butted against the step bottom face 12a to form a second butted portion J2.

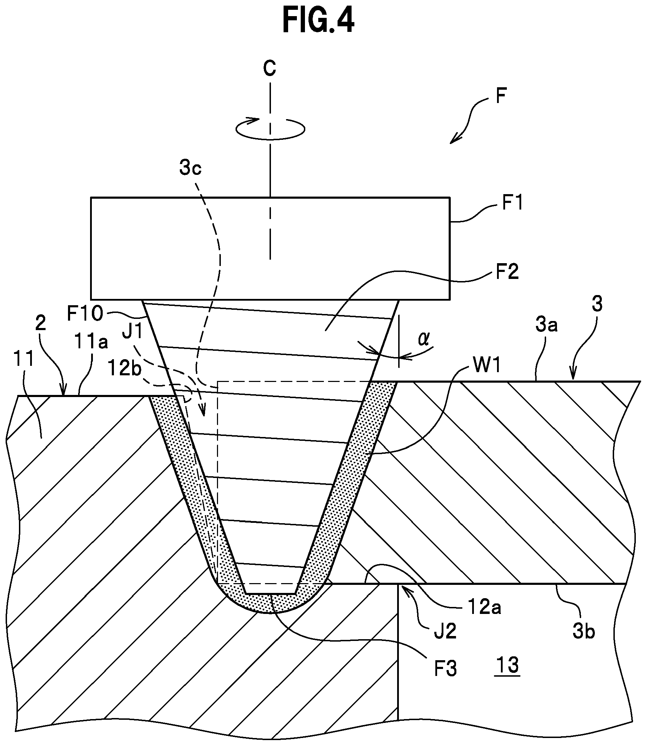

As shown in FIGS. 3 and 4, the primary joining process is a process where friction stir welding is performed to the jacket body 2 and the sealing body 3 with use of the rotary tool F being rotated while moving one round around the sealing body 3. The rotary tool F is composed of a connecting portion F1 and a stirring pin F2. The rotary tool F is made of, for example, tool steel. The connecting portion F1 is a portion to be connected to a rotary shaft of a friction stir device (not shown) . The connecting portion F1 has a column shape, and has a thread hole (not shown) into which a bolt is fastened. The friction stir device, to which the rotary tool F is connected, is, for example, a robot arm equipped with a rotation driving device such as a spindle unit at the tip thereof, so that a rotational axis C of the rotary tool F can be freely inclined.

The stirring pin F2 hangs down from and is coaxial with the connecting portion F1. The stirring pin F2 has a smaller diameter with increasing distance from the connecting portion F1 toward the tip thereof. As shown in FIG. 4, the stirring pin F2 has a flat face F3, which is flat and orthogonal to the rotational axis C, at the tip thereof. That is, an outer face of the stirring pin F2 is composed of an outer circumferential face F10 having a smaller diameter with increasing distance toward the tip, and the flat face F3 formed at the tip. When it is viewed from the side, an inclination angle α of the outer circumferential face F10 of the stirring pin F2 with respect to the rotational axis C may be appropriately set to an angle in the range of, for example, 5°to 40°.

The stirring pin F2 has a spiral groove formed in the outer circumferential face thereof. In this embodiment, since the rotary tool F is rotated clockwise, the spiral groove is formed to rotate counterclockwise with increasing distance from the base end toward the tip. In other words, the spiral groove is formed to rotate counterclockwise with increasing distance from the base end toward the tip when it is viewed from the upper side.

Note that, in a case where the rotary tool F is rotated counterclockwise, it is preferable that the spiral groove is formed to rotate clockwise with increasing distance from the base end toward the tip. In other words, the spiral groove of this case is formed to rotate clockwise with increasing distance from the base end toward the tip when it is viewed from the upper side. By forming the spiral groove in such a manner, plastically fluidized metal formed by friction stirring is led toward the tip of the stirring pin F2 through the spiral groove. By this, the amount of metal to leak out of the metal members to be joined (the jacket body 2 and the sealing body 3) can be reduced.

As shown in FIG. 3, when friction stirring is performed with use of the rotary tool F, only the stirring pin F2 being rotated clockwise is inserted in the sealing body 3 and moved in a state that the connecting portion F1 is away from the sealing body 3. In other words, friction stirring is performed in a state that a base end portion of the stirring pin F2 is exposed. The metal frictionally stirred is hardened, so that a plasticized region W1 is formed at a moving track of the rotary tool F. In this embodiment, the stirring pin F2 is inserted at a starting position Sp set on the sealing body 3 and the rotary tool F is moved clockwise relative to the sealing body 3.

As shown in FIG. 4, in the primary joining process, friction stirring is performed in a state that the rotational axis C of the rotary tool F is parallel with a vertical line (vertical plane). The inclination angle β of the step bottom face 12a is set smaller than the inclination angle α of the outer circumferential face of the stirring pin F2. In the primary joining process, it is set so that an upper portion of the outer circumferential face F10 of the rotary tool F is slightly brought in contact with an upper portion of the step side face 12b of the peripheral wall step portion 12 and a lower portion of the outer circumferential face F10 is not brought in contact with the step side face 12b of the peripheral wall step portion 12. The flat face F3 of the stirring pin F2 may be inserted to the same height position as the step bottom face 12a of the peripheral wall step portion 12, but in this embodiment, the flat face F3 is inserted to a slightly deeper position than the step bottom face 12a of the peripheral wall step portion 12. In the primary joining process, the rotary tool F is made to leave the jacket body 2 and the sealing body 3 after the rotary tool F is moved one round around the sealing body 3 to overlap a beginning and an end of the plasticized region W1.

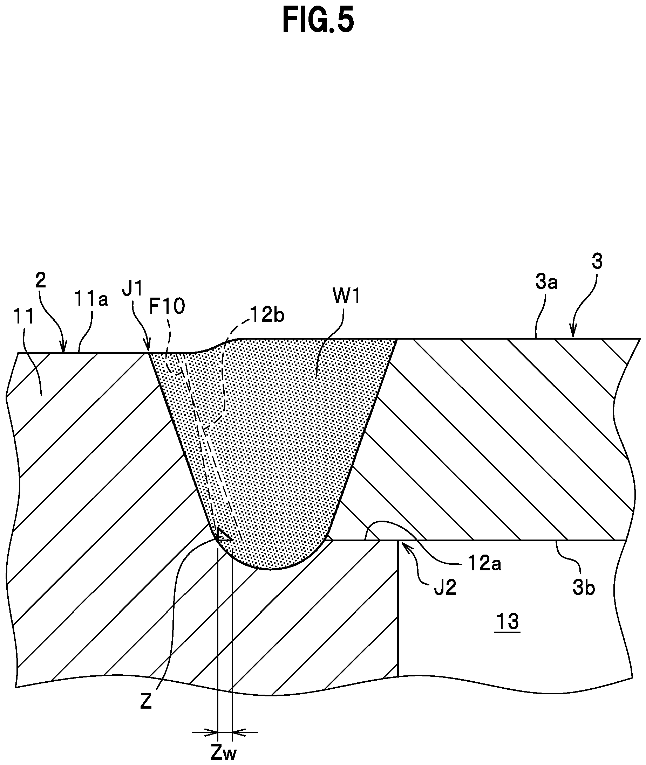

As shown in FIG. 5, by the primary joining process, the plasticized region W1 is formed at the moving track of the rotary tool F and a coarse portion Z is formed at a region which is in the lower portion of the plasticized region W1 and in the vicinity of the inside of the step side face 12b. The coarse portion Z is a region in which the plastically fluidized material has not been sufficiently stirred and the density of the plastically fluidized material is coarser than the other region. The coarse portion Z is formed continuously or intermittently in the length direction of the plasticized region W1.

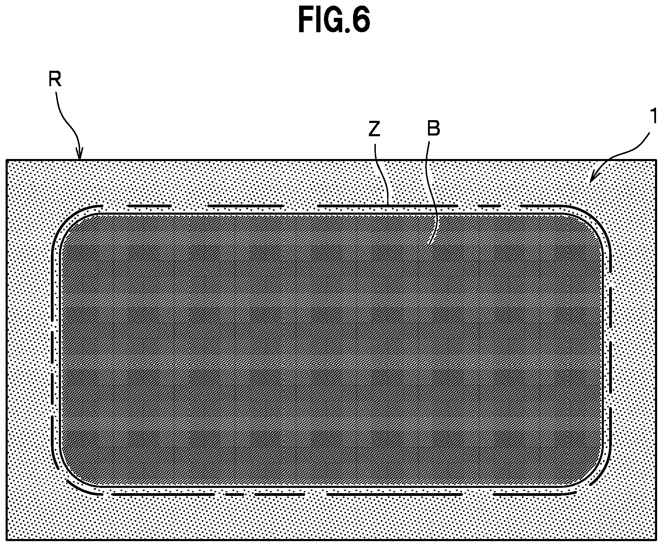

As shown in FIG. 6, the inspection process is a process to perform a defect inspection for a liquid-cooling jacket 1. In the inspection process, an ultrasonic flaw detector (for example, ultrasonic imaging device (SAT) made by Hitachi High-Teck GLOBAL) is used. A hollow portion B of the liquid-cooling jacket 1 in an inspection result screen R in FIG. 6 is shown in another color. Furthermore, the coarse portion Z is shown around the hollow portion B in another color and in a frame shape with broken lines. That is, it can be judged that the rotary tool F has passed the entire periphery of the sealing body 3 by displaying the coarse portion Z on the inspection result screen R. The region between the hollow portion B and the coarse portion Z is an area corresponding to the plasticized region W1.

It is preferable that the width Zw of the coarse portion Z is 400 µm or less, more preferably 300µm or less, and further preferably 200µm or less. In a case where the width Zw of the coarse portion Z is more than 400 µm, there is a concern of poor joint strength of the first butted portion J1. In other words, in the case where the width Zw of the coarse portion Z is 400 µm or less, sufficient joint strength is obtained. On the other hand, it is preferable that the width Zw of the coarse portion Z is 100 µm or more. In a case where the width Zw of the coarse portion Z is less than 100 µm, there is a concern that the coarse portion Z is not shown on the inspection result screen R obtained with use of ultrasonic flaw detector.

AS shown in FIG. 4, in the primary joining process, the ratio of a region where the outer circumferential face F10 of the stirring pin F2 is in contact with the step side face 12b and the other region where the outer circumferential face F10 of the stirring pin F2 is not in contact with the step side face 12b is about 2 : 8 in this embodiment. The ratio may be appropriately set in a range where the jacket body 2 and the sealing body 3 are joined together with a desired strength and the coarse portion Z having said predetermined width is formed. In other words, the inclination angle α of the outer circumferential face F10 of the stirring pin F2, the inclination angle β of the step side face 12b of the peripheral wall step portion 12, and the position (position in a width direction) of the rotational axis C of the stirring pin F2 may be appropriately set in a range where the jacket body 2 and the sealing body 3 are joined together with a desired strength and the coarse portion Z having said predetermined width is formed.

In a case where the contacting ratio between the stirring pin F2 and the step side face 12b is larger, much metal of the jacket body 2 flows to the sealing body 3 side. Consequently, the balance of stirring to the jacket body 2 and the sealing body 3 is not good, so that there is a concern that the joint strength decreases. Furthermore, also in a case where the outer circumferential face F10 of the stirring pin F2 is apart from the step side face 12b, there is a concern that the joint strength decreases. For this reason, it is preferable that the stirring pin is at least brought in contact with an upper portion of the step side face 12b. And further, in the vicinity of the step bottom face 12a, in a case where the outer circumferential face F10 and the step side face 12b are too close and also in a case where they are too far, the coarse portion Z having said predetermined width cannot be formed.

According to the method for manufacturing the liquid-cooling jacket according to this embodiment described in the above, the metal on the sealing body 3 side at the first butted portion J1 is mainly frictionally stirred because of the frictional heat between the stirring pin F2 and the sealing body 3 to be plastically fluidized, so that the step side face 12b and the outer side face 3c of the sealing body 3 can be joined together at the first butted portion J1. Further, since friction stirring is performed in a state that only the stirring pin F2 is slightly in contact with at least an upper portion of the step side face 12b of the jacket body 2, it is possible to reduce metal mixing from the jacket body 2 to the sealing body 3 as much as possible while ensuring the joint strength. Hereby, at the first butted portion J1, since the metal on the sealing body 3 side is mainly frictionally stirred, lowering of the joint strength can be suppressed.

Since the stirring pin F2 is inserted to the same depth as the step bottom face 12a or slightly deeper than that, it is possible to reduce metal mixing from the jacket body 2 to the sealing body 3 as much as possible while enhancing the joint strength at the second butted portion J2. By deliberately forming the coarse portion Z having the predetermined width, the passed position of the stirring pin F2 can be detected by defect inspection. Hereby, quality control work can be more easily performed. Further, by forming the outer circumferential face F10 of the stirring pin F2 and the step side face 12b inclined, it can be avoided for the stirring pin F2 to come into contact with the step side face 12b in a large area and the width Zw, a size, and so on of the coarse portion Z can be easily controlled. And further, by forming a large thickness of the sealing body 3, the joined portion can be prevented from falling in metal shortage.

In the primary joining process, a rotational direction and an advancing direction of the rotary tool F may be appropriately set. In this embodiment, the rotational direction and the advancing direction of the rotary tool F have been set so that the jacket body 2 side is a shear side and the sealing body 3 side is a flow side within the plasticized region W1 to be formed at the moving track of the rotary tool F. This enhances the stirring action around the first butted portion J1, so that rising of the temperature at the first butted portion J1 is expected, and the step side face 12b and the outer side face 3c of the sealing body 3 can be more firmly joined together at the first butted portion J1.

Note that, a shear side (Advancing side) is a side where the relative speed of the outer periphery of a rotary tool relative to a portion to be joined is a value that an advancing speed is added to a tangential speed at the outer periphery of the rotary tool. On the other hand, a flow side (Retreating side) is a side where the relative speed of the rotary tool relative to a portion to be joined is lowered since the rotary tool is rotated in the direction opposite to the advancing direction of the rotary tool.

The first aluminum alloy of the jacket body 2 has a hardness harder than the second aluminum alloy of the sealing body 3. This can enhance the endurance of the liquid-cooling jacket 1. Furthermore, it is preferable that the first aluminum alloy of the jacket body 2 is an aluminum alloy casting material and the second aluminum alloy of the sealing body 3 is an aluminum alloy expansible material. In a case where the first aluminum alloy is, for example, the aluminum alloy casting material based on Al-Si-Cu such as JISH5302 ADC12, castability, strength and machinability of the jacket body 2 can be enhanced. And in a case where the second aluminum alloy is, for example, a material of JIS A1000 series or A6000 series, processing ability and thermal conductivity can be enhanced.

For example, the thickness of the sealing body 3 is set larger than the height dimension of the step side face 12b in this embodiment, but both may be set the same as each other. Furthermore, the step side face 12b may be formed perpendicular to the step bottom face 12a instead of inclination.

In the above embodiment, the method for manufacturing the liquid-cooling jacket formed by joining the jacket body and the sealing body is described as an example, but the present invention is not limited to this. Figures are omitted, and the present invention is not limited to the shape of a liquid-cooling jacket and can be also applied to friction stir welding to join a first member having a step portion and a second member to be disposed on the step portion.

### <Second embodiment>

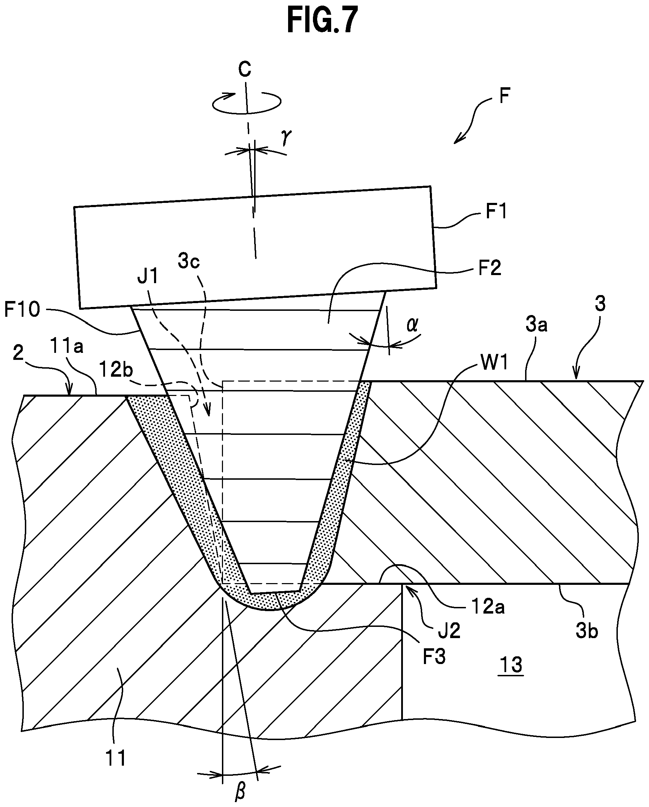

Next, a method for manufacturing a liquid-cooling jacket according to a second embodiment of the present invention will be described. As shown in FIG. 7, the second embodiment differs from the first embodiment in that friction stirring is performed in a state that the rotary tool F is inclined. In this embodiment, a preparation process, a placing process, a primary joining process, and an inspection process are performed. In this embodiment, differences from the first embodiment will be mainly described.

In the primary joining process of this embodiment, as shown in FIG. 7, friction stirring is performed in a state that the rotary tool F is inclined toward the outside relative to a vertical plane (the outer side face 3c of the sealing body 3) by the inclination angle γ. Also in this case, it is possible to insert the stirring pin F2 so that the tip of the stirring pin F2 is located at a position slightly deeper than the step bottom face 12a while the stirring pin F2 is slightly in contact with the step side face 12b. Furthermore, a tip side area of the stirring pin F2 is not in contact with the step side face 12b.

Hereby, the coarse portion Z having the predetermined width can be formed like the first embodiment. The inclination angle may be appropriately set, and it is preferable to set to, for example, γ < α - β. Further, it is preferable to set to 0 < α - β. In this embodiment, the rotary tool F is inclined toward the outside (a side apart from the sealing body 3), but may be inclined toward the inner side. The inclination angle and inclination direction of the rotary tool F may be appropriately set within the range in which the coarse portion Z having the predetermined width described in the above is formed while the jacket body 2 and the sealing body 3 are joined together with a desired strength.

### <Third embodiment>

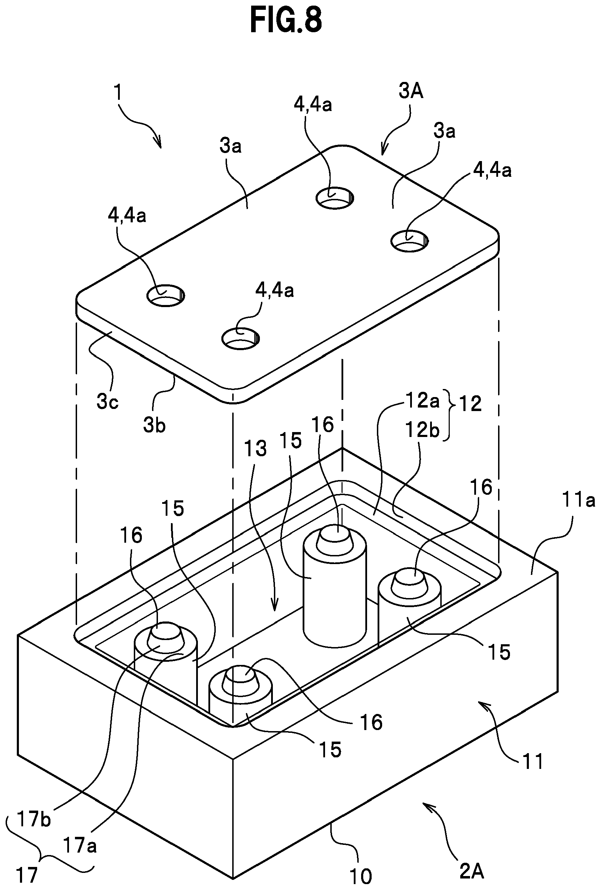

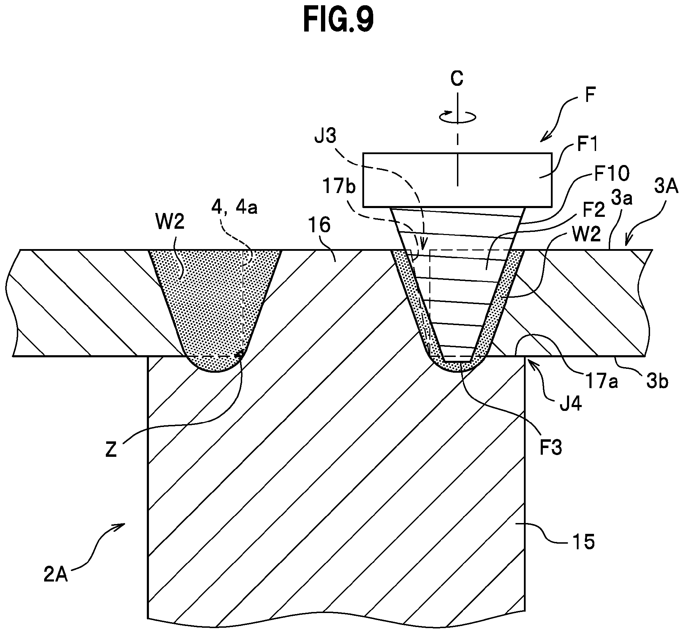

Next, a method for manufacturing a liquid-cooling jacket according to a third embodiment of the present invention will be described. As shown in FIGS. 8 and 9, the third embodiment differs from the first embodiment in that columns 15 of a jacket body 2A and a sealing body 3A are joined together. In this embodiment, a preparation process, a placing process, a primary joining process, and an inspection process are performed. The primary joining process has a first primary joining process and a second primary joining process. In this embodiment, differences from the first embodiment will be mainly described.

In the preparation process, a jacket body 2A and a sealing body 3A are prepared. The jacket body 2A is provided with a bottom portion 10, a peripheral wall portion 11, and the plural columns 15 (in this embodiment, four). Each column 15 stands on the bottom portion 10 and has a column shape. Each column 15 is provided with a projected portion 16 tapered to have a smaller diameter with increasing distance toward a tip thereof at the top thereof. Since the projected portion 16 is provided, a column step portion 17 is formed on the top side of the column 15. The column step portion 17 is composed of a step bottom face 17a and a step side face 17b inclined toward the central axis from the step bottom face 17a. The sealing body 3A has hole portions 4 formed at positions corresponding to each of the columns 15. Each hole portion 4 has such a size that a corresponding projected portion 16 can be inserted therein.

The placing process is a process in which the sealing body 3A is placed on the jacket body 2A. This process forms a first butted portion J1 like the first embodiment. And further, as shown in FIG. 9, a third butted portion J3 is formed by butting the step side face 17b of the column step portion 17 against a hole wall 4a of the hole portion 4. A fourth butted portion J4 is formed by butting the step bottom face 17a of the column step portion 17 against a back face 3b of the sealing body 3A.

In the primary joining process, the first primary joining process in which the first butted portion J1 and the second butted joining portion J2 are joined, and the second primary joining process in which the third butted portion J3 and the fourth butted joining portion J4 are joined are performed. Description of the first primary joining process is omitted since the first primary joining process is the same as the primary joining process in the first embodiment.

As shown in FIG. 9, in the second primary joining process, an upper portion of the outer circumferential face F10 of the rotary tool F is slightly brought in contact with an upper portion of the step side face 17b of the column step portion 17 and a lower portion of the outer circumferential face F10 is not brought in contact with the step side face 17b of the column step portion 17. The stirring pin F2 is inserted so that the flat face F3 thereof is located at a position slightly deeper than the step bottom face 17a of the column step portion 17.

As shown in FIG. 9, by performing the primary joining process, a plasticized region W2 is formed at a moving track of the rotary tool F, and the coarse portion Z is formed at a lower portion of the plasticized region W2 and in the outside vicinity of the step side face 17b. The coarse portion Z is a portion in which the plastically fluidized material is not fully frictionally stirred and which is coarser than the other portions. The coarse portion Z is continuously or intermittently formed in the plasticized region W2. A forming method and forming conditions for the coarse portion Z are the same as that or those in the first embodiment.

This embodiment can attain similar effects to the first embodiment. Further, this embodiment can enhance the joint strength since the column 15 and the sealing body 3A are joined together. And furthermore, the moving track of the rotary tool F around the column 15 can be confirmed in the inspection process by forming the coarse portion Z within the plasticized region W2 and in the outside vicinity of the base end side of the projected portion 16.

### <Example>

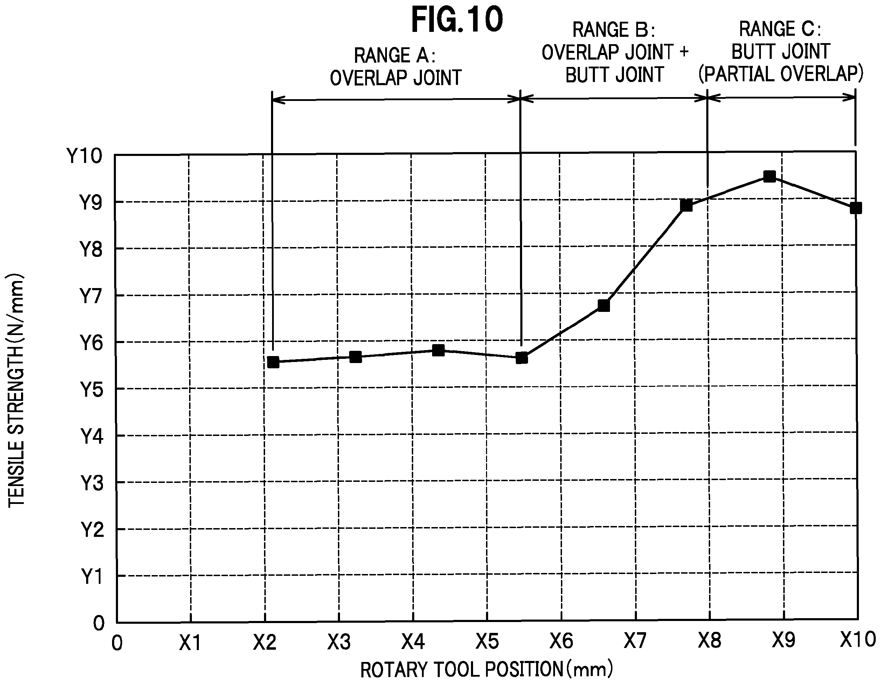

Next, an example of the present invention will be described. In the example, after the primary joining process was performed under predetermined conditions, a test 1, in which the relationship between a rotary tool position and a tensile strength was confirmed by performing a tensile test, was performed. And after the primary joining process was performed under predetermined conditions, a test 2, in which a macrostructure cross section of the jointed portion was confirmed, was performed. FIG. 10 is a graph showing the relationship between the rotary tool position and the tensile strength in the test 1.

In the test 1, eight test bodies were provided and the primary joining process was performed to each test body. In the test 1, friction stir welding was performed while the insertion depth of the stirring pin F2 was kept constant and a position (position in the width direction) of the rotary tool F was changed. An aluminum alloy ADC12 was used for the jacket body 2, and an aluminum alloy A6063 was used for the sealing body 3. Each height dimension of the step side face 12b and the sealing body 3 was set to 3 mm.

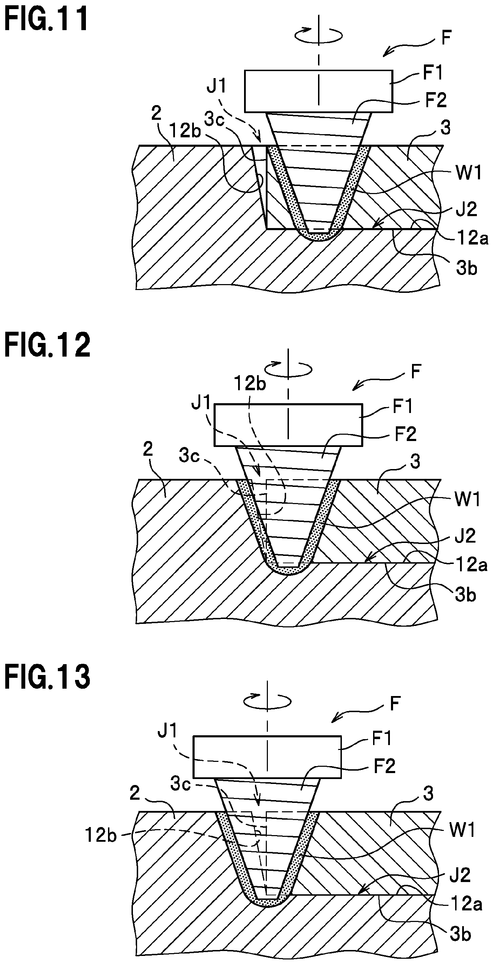

As shown in FIGS. 10, 11, a range A shows an "overlap joint". The "overlap joint" of the range A is a state that the outer circumferential face F10 of the stirring pin F2 is not in contact with the step side face 12b, and the tip of the stirring pin F2 has reached the step bottom face 12a. As shown in FIG. 10, four test bodies are included in the range A. A rotary tool position X2 corresponds to the position of the rotary tool F shown in FIG. 11.

As shown in FIGS. 10, 11, an "overlap joint + butt joint" of a range B is a state that the outer circumferential face F10 of the stirring pin F2 is in contact with the step side face 12b, and the tip side of the stirring pin F2 is not in contact with the step side face 12b. Furthermore, it is also a state that the tip of the stirring pin F2 has reached the step bottom face 12a. As shown in FIG. 10, two test bodies are included in the range B. The embodiment of the range B is the same as the first embodiment of the present invention.

As shown in FIGS. 10, 11, a "butt joint (partial overlap)" of a range C is a state that the stirring pin F2 is in contact with the whole of the step side face 12b and a portion of the step bottom face 12a. As shown in FIG. 10, two test bodies are included in the range C. A rotary tool position X10 corresponds to the position of the rotary tool F shown in FIG. 13.

As shown in FIG. 10, it was found that the "overlap joint" of the range A has a tensile strength lower than the other embodiments. That is, it was found that the joint of only the second butted portion J2 has a lower tensile strength.

On the other hand, it was found that the "butt joint (partial overlap)" of the range C has a larger tensile strength since both of the first butted portion J1 and the second butted portion J2 are frictionally stirred, but the tensile strength reduces from the peak in the vicinity of a rotary tool position X9. It is considered that in a case where the overlapping dimension between the jacket body 2 and the rotary tool F is larger, much metal of the jacket body 2 flows into the sealing body 3 side, and this causes a poor stirring balance to reduce the tensile strength.

Furthermore, it was found that the "overlap joint + butt joint" of the range B has a larger tensile strength since both of the first butted portion J1 and the second butted portion J2 are frictionally stirred, and the tensile strength tends to increase. Accordingly, it was found that it is preferable that the position of the rotary tool F is a position where the stirring pin F2 is slightly in contact with both of the step side face 12b and the step bottom face 12a.

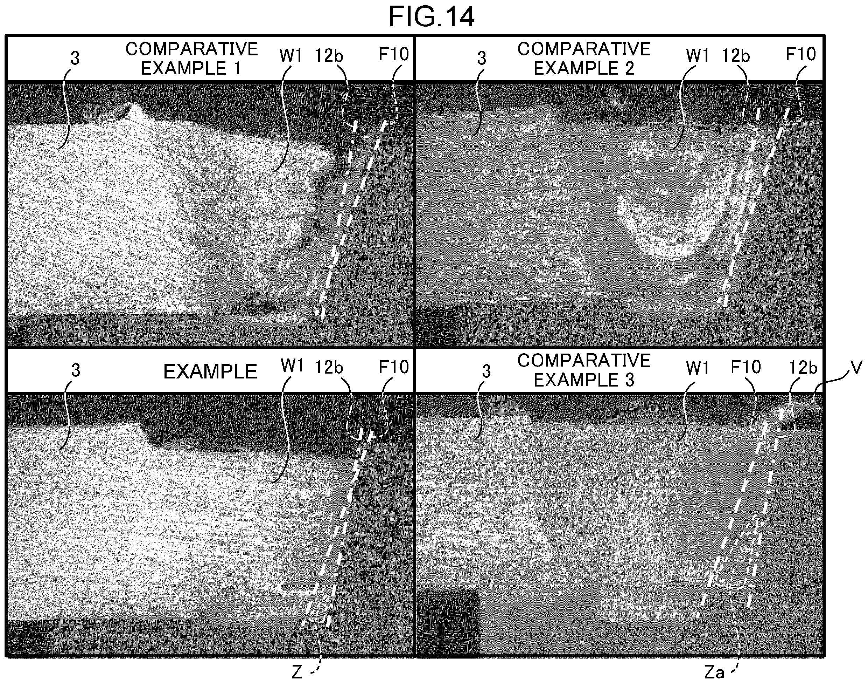

FIG. 14 shows macrostructure cross sections of comparative examples 1 to 3 and an example in the test 2. In the test 2, other four test bodies were provided, and the primary joining process was performed to each test body. In the test 2, the joining statuses were confirmed through the macrostructure cross sections generated by changing the insertion depth and the position of the rotary tool F. An aluminum alloy ADC12 was used for the jacket body 2, and an aluminum alloy A1100 was used for the sealing body 3. The height dimension of the step side face 12b was set to 3.0 mm and the height dimension of the sealing body 3 was set to 3.5 mm. The inclination angle β of the step side face 12b was set to 10°.The taper angle of the stirring pin F2 was set to 40°, the pitch of the groove was set to 0.5 mm, and the diameter of the flat surface F3 was set to 1.5 mm.

In the comparative example 1, an insertion amount of the rotary tool F was set to 0.65 mm, and an overlapping dimension with the step side face 12b was set to 0.55 mm. The insertion amount is a distance from the step bottom face 12a to the tip of the rotary tool F. The overlapping dimension is a distance (maximum distance) from the step side face 12b to the outer circumferential face F10 of the stirring pin F2. In a case where the overlapping dimension is plus, it means that the outer circumferential face F10 is in contact with the step side face 12b.

In the comparative example 2, the insertion amount of the rotary tool F was set to 0.5 mm, and the overlapping dimension with the step side face 12b was set to 0.35 mm.

In the comparative example 3, the insertion amount of the rotary tool F was set to 0.2 mm, and the overlapping dimension with the step side face 12b was set to -0.15 mm. In the comparative 3, the outer circumferential face F10 of the stirring pin F2 is completely apart from the step side face 12b.

In the example, the insertion amount of the rotary tool F was set to 0.2 mm, and the overlapping dimension with the step side face 12b was set to 0.15 mm. In the example, the stirring pin F2 is in contact with an upper portion of the step side face 12b and apart from a lower portion of the step side face 12b.

As shown in FIG. 14, in the comparative example 1, the overlapping dimension between the outer circumferential face F10 of the stirring pin F2 and the step side face 12b is too large, so that many cavity defects are caused in the plasticized region W1.

In the comparative example 2, a cavity defect is not caused in the plasticized region W1, and the coarse portion Z is not formed since the overlapping dimension between the outer circumferential face F10 of the stirring pin F2 and the step side face 12b is too large.

In the comparative example 3, since the stirring pin F2 is completely apart from the step side face 12b, a large coarse portion Za is formed at a lower portion between the outer circumferential face F10 and the step side face 12b. The width of the coarse portion Za is about 500 µm. Furthermore, many burrs V are also generated in the comparative example 3.

In the example, there is no cavity defect in the plasticized region W1, and no burrs are generated, either. The coarse portion Z having the width of about 200 µm is formed at the inside of a lower portion of the step side face 12b. It was found that under the conditions of the example, the joint strength can be also enough secured and the coarse portion Z is also formed with a predetermined width and is good. Note that, numerical values of the example are mere examples and do not limit the present invention.

### REFERENCE SIGNS LIST

- 1: Liquid-cooling jacket
- 2: Jacket body (First member)
- 3: Sealing body (Second member)
- F: Rotary tool
- F1: Connecting portion
- F2: Stirring pin
- F3: Flat face
- J1: First butted portion
- J2: Second butted portion
- W1: Plasticized region
- Z: Coarse portion

## Claims

1. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a material harder than the sealing body, and
wherein an outer circumferential face of the stirring pin is inclined to have a smaller diameter with increasing distance toward a tip thereof,
the method comprising:
a preparation process in which a peripheral wall step portion having a step bottom face and a step side face is formed along an inner peripheral edge of the peripheral wall step portion, the step side face standing from the step bottom face toward the opening portion;
a placing process in which by placing the sealing body on the jacket body, a first butted portion is formed so that an outer peripheral side face of the sealing body is butted against the step side face of the peripheral wall step portion, and a second butted portion is formed so that the step bottom face overlaps with a back face of the sealing body;
a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the jacket body; and
an inspection process in which a passed position of the stirring pin is detected by performing a defect inspection to detect the coarse portion after the primary joining process.

2. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a material harder than the sealing body, and
wherein an outer circumferential face of the stirring pin is inclined to have a smaller diameter with increasing distance toward a tip thereof,
the method comprising:
a preparation process in which a peripheral wall step portion having a step bottom face and a step side face is formed along an inner peripheral edge of the peripheral wall step portion, the step side face standing from the step bottom face toward the opening portion, and the sealing body is formed to have a thickness larger than a height dimension of the step side face of the peripheral wall step portion;
a placing process in which by placing the sealing body on the jacket body, a first butted portion is formed so that an outer peripheral side face of the sealing body is butted against the step side face of the peripheral wall step portion, and a second butted portion is formed so that the step bottom face overlaps with a back face of the sealing body;
a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the jacket body; and
an inspection process in which a passed position of the stirring pin is detected by performing a defect inspection to detect the coarse portion after the primary joining process.

3. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a material harder than the sealing body, and
wherein an outer circumferential face of the stirring pin is inclined to have a smaller diameter with increasing distance toward a tip thereof,
the method comprising:
a preparation process in which a peripheral wall step portion having a step bottom face and a step side face is formed along an inner peripheral edge of the peripheral wall step portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between an outer peripheral side face of the sealing body and the step side face of the peripheral wall step portion, and a second butted portion is formed so that the step bottom face overlaps with a back face of the sealing body;
a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the jacket body; and
an inspection process in which a passed position of the stirring pin is detected by performing a defect inspection to detect the coarse portion after the primary joining process.

4. The method for manufacturing a liquid-cooling jacket according to any one of claims 1, 2 and 3,
wherein the sealing body is made of an aluminum alloy expansible material and the jacket body is made of an aluminum alloy casting material.

5. The method for manufacturing a liquid-cooling jacket according to any one of claims 1, 2 and 3,
wherein the rotary tool is rotated clockwise in a case where the rotary tool has a spiral groove on the outer circumferential face thereof, the spiral groove being counterclockwise with increasing distance from a base end toward a tip thereof, and
wherein the rotary tool is rotated counterclockwise in a case where the rotary tool has a spiral groove on the outer circumferential face thereof, the spiral groove being clockwise with increasing distance from the base end toward the tip thereof.

6. The method for manufacturing a liquid-cooling jacket according to any one of claims 1, 2 and 3,
wherein in the primary joining process, a rotational direction and an advancing direction of the rotary tool are set so that within a plasticized region to be formed at a moving track of the rotary tool, a jacket body side is a shear side and a sealing body side is a flow side.

7. The method for manufacturing a liquid-cooling jacket according to claim 3,
wherein in the primary joining process, friction stir welding is performed in a state that the rotary tool is inclined and furthermore, in a state that γ < α - β, the γ being an inclination angle of a rotational axis of the rotary tool with respect to a vertical plane, the β being an inclination angle of the step side face with respect to a vertical plane, the α being an inclination angle of the outer circumferential face of the stirring pin with respect to the rotational axis.

8. The method for manufacturing a liquid-cooling jacket according to claim 7,
wherein in the primary joining process, the friction stir welding is performed in a state that 0 < α - β.

9. A friction stir welding method in which a first member and a second member are joined together with use of a rotary tool provided with a stirring pin,
wherein the first member is made of a material harder than the second member, and
wherein an outer circumferential face of the stirring pin is inclined to have a smaller diameter with increasing distance toward a tip thereof,
the method comprising:
a preparation process in which a step portion having a step bottom face and a step side face standing on the step bottom face is formed in the first member;
a placing process in which by placing the second member on the first member, a first butted portion is formed so that a side face of the second member is butted against the step side face of the step portion, and a second butted portion is formed so that the step bottom face overlaps with a back face of the second member;
a primary joining process in which a coarse portion having a predetermined width is formed in the vicinity of the step side face within a plasticized region while the rotary tool is being moved one round along the first butted portion to perform friction stirring in a state that the tip of the stirring pin of the rotary tool which is rotated is inserted to the same depth as or slightly deeper than the step bottom face and only the stirring pin is slightly in contact with at least an upper portion of the first member; and
an inspection process in which a passed position of the stirring pin is detected by performing a defect inspection to detect the coarse portion after the primary joining process.
